# EUROPEAN PATENT SPECIFICATION

(11) **EP 1 444 175 B1**
(45) Date of publication and mention of the grant of the patent: **04.01.2012**
(21) Application number: 02790330.1
(22) Date of filing: 01.11.2002
(51) Int. Cl.: C05D 9/02

(54) **AQUEOUS IRON CHELATE COMPOSITION**
WÄSSRIGE EISENCHELAT-ZUSAMMENSETZUNG
COMPOSITION AQUEUSE DE CHELATE METALLIQUE

(30) Priority: 14.11.2001 EP 01204357
(43) Date of publication of application: 11.08.2004
(73) Proprietor: Akzo Nobel N.V., 6824 BM Arnhem (NL)
(72) Inventor: REICHWEIN, Adrianus, Maria, 6883 EK Velp (NL)
(74) Representative: Schalkwijk, Pieter Cornelis
(86) International application number: PCT/EP2002/012290
(87) International publication number: WO 2003/042128

(56) References cited:
- EP-A- 0 334 630
- DD-A- 287 026
- ES-A- 2 110 894
- GB-A- 1 307 828
- US-A- 4 002 456
- CHEMICAL ABSTRACTS, vol. 115, no. 3, 22 July 1991 (1991-07-22) Columbus, Ohio, US; abstract no. 28165z, M.M. EL-FOULY ET AL.: "Micronutrient foliar intake by different crop plants, as affected by accompanying urea" page 672; XP000186521 cited in the application & DEV. PLANT SOIL SCI., vol. 41, 1990, pages 267-273,

## Description

The present invention relates to an aqueous iron chelate composition.

Iron chelates such as ferric ion ethylenediamine-N,N.'-bis(2-hydroxyphenylacetic acid) (Fe-EDDHA) and ferric ion ethylenediamine-N,N'-bis(2-hydroxy-4-methylphenylacetic acid) (Fe-EDDHMA) are known to be effective agents for remedying iron deficiency in a wide range of agricultural and horticultural crops, particularly in alkaline and calcareous soils.

In the past, powders or (micro)granules of Fe-EDDHA and Fe-EDDHMA were dissolved in irrigation water before application to the soil. Both compounds, however, suffer from the disadvantage of low solubility in water; the powder forms are particularly difficult to handle because of dusting and their tendency to cake or form lumps in the presence of water. Aqueous solutions of the compounds are correspondingly difficult to prepare. Attempts to make such solutions tend to result in the precipitation of a sticky mass of material in the mixing vessel, unless the addition of the solid Fe-EDDHA or Fe=EDDHMA to the water is accompanied by continuous strong agitation of the contents of the vessel. This causes a particular problem when it is desired to dissolve the compounds in irrigation water, where agitation to aid dissolution is difficult.

Attempts to solve this problem by preparing aqueous solutions of the compounds for direct application to the soil have not been particularly successful because even with sufficient agitation it is not possible to obtain a solution which is more concentrated in Fe-EDDHA than about 30% w/v, or more concentrated in Fe-EDDHMA than about 20% w/v.

Since commercially available Fe-EDDHA and Fe-EDDHMA chelates are themselves only about 6% iron by weight and normally contain considerable amounts of salts such as sodium sulphate or sodium chloride as well as byproducts, a 30% w/v or approx. 25 wt% aqueous solution of Fe-EDDHA has an iron concentration of only about 1.8 g per 100 ml of water (i.e. 18 g/l), and a 20% w/v or approx. 15 wt% aqueous solution of Fe-EDDHMA has an iron concentration of only about 1.2 g per 100 ml of water (i.e. 12 g/l).

The low iron contents of these aqueous solutions, the difficulties in preparing the solutions, and the problems which are associated with agricultural use of Fe-EDDHA and Fe-EDDHMA chelates in the solid form (even after granulation, itself an expensive process) tend to restrict the agricultural usefulness of what might otherwise be effective agents for remedying iron deficiency in soils.

Since aqueous solutions of iron chelates offer advantages over the use of iron chelates in the form of powders or (micro)granules, such as easier handling by simply diluting the liquid formulation with water before use and the prevention of dusting associated with the use of solid forms, there is a need in the art for aqueous solutions having a high iron (chelate) content. Preferably, the aqueous solution should be as concentrated as possible, because the increase in the cost of transportation of an aqueous solution of the iron chelate should not compromise the saving in the cost of drying when manufacturing a dry, solid form of the iron chelate. Preferably, said aqueous solution should have a practical storage stability or shelf life.

EP-A-0 334 630 discloses compositions for treating iron deficiencies in soils comprising an iron chelate compound and an agriculturally acceptable organic solvent, preferably a polyhydric alcohol, such as ethylene glycol, or an ether of said polyhydric alcohol, such as 2-ethoxyethanol. The composition of Example 1 comprising Fe-EDDHA has an iron concentration of 42 g/l or approx. 3 wt%.

The use of an organic solvent for improving the water solubility of iron chelates, thereby increasing the iron chelate content in the solution, is not always desirable, however, because of environmental and health considerations. For example, 2-ethoxyethanol is suspected to have teratogenic properties.

WO-A-99/08982 discloses high concentration soluble chelated iron compositions for easy distribution to plants. The aqueous solution is characterised by having a high pH value, preferably exceeding 12, and by containing solubilised iron ions chelated by at least one ligand having a plurality of hydroxyl groups, such as tartaric acid or mannitol.

However, the use of a polyhydroxyl compound - in a relatively large amount - is not always desirable either, because it adds to the cost. Furthermore, the highly alkaline solution is corrosive and this is unwanted. Also, the composition of Example 5 comprising Fe-EDDHA only has an iron concentration of approx. 1 wt% at the most.

Hence, there is a need in the art for an aqueous composition which does not have the aforementioned drawbacks. The present invention provides a composition having a high concentration of soluble chelated iron which is capable of being easily distributed to the soil. It avoids the use of an organic solvent and does not require the use of a ligand having a plurality of hydroxyl groups in combination with a high pH value.

The composition of the present invention consists essentially of water, an iron chelate, and a compound of formula RC(O)NH₂, wherein R represents NH₂ or a C₁-C₈ alkyl group.

Incidentally, ES-A-2 110 894 discloses a liquid fertilizer containing iron wholly chelated with EDDHA, manganese wholly chelated with EDTA, Zn wholly chelated with EDTA, free amino acids, and urea. The fertilizer is used for reducing chlorosis in vegetables.

GB-A-1 307 828 discloses in Example 1 an aqueous fertilizer composition containing - in addition to iron chelate and urea - phosphate and magnesium ions. The compositions described in this document contain 0 to 0.5 wt% of iron.

Chemical Abstracts 115: 28165z discloses a composition of EDTA-chelated Mn-Zn-Fe combinations with urea and describes the increased foliar intake of the micronutrient composition by adding urea.

US 4,002,456 relates to agents for plant-growth promotion and discloses a nonaqueous solution of the chloride of a trace element and boric acid in N-methylpyrrolidon, which solution also contains formamide or acetamide. It also describes that urea, acetamide and formamide promote the intake of micronutrients by the plant.

DD-A-287 026 discloses compositions containing lignin sulfonic acid-chelated micronutrients. This document does not relate to compositions containing iron chelates.

The foregoing five documents do not relate to the problems underlying the present invention and do neither disclose nor suggest the composition in accordance with the present invention.

In the context of the present invention, the phrase "consisting essentially of" in claim 1 of this application is meant to exclude the incorporation in the composition of any constituents other than water, iron chelate, and compound of formula RC(O)NH₂, with the exception of impurities or other materials contained in the iron chelate or compound of formula RC(O)NH₂ - as commercially available or after their preparation - which are used as starting materials for making the aqueous composition in accordance with the present invention.

The iron chelate to be used in accordance with the present invention is Fe-EDDHA, Fe-EDDHmA or mixtures of Fe-EDDHA or Fe-EDDHMA with one or more other iron chelates such as ferric ion diethylenetriaminepentaacetic acid (Fe-DTPA), ferric ion ethylenediaminetetraacetic acid (Fe-EDTA) or ferric ion hydroxyethylenediaminetriacetic acid (Fe-HEDTA). Preferably, the iron chelate comprises Fe-EDDHA.

Preferably, R represents NH₂ or a C₁-C₆ alkyl group. More preferably, the alkyl group is a C₁-C₄ alkyl group, even more preferably a C₁-C₂ alkyl group. More preferably, R represents an NH₂ or a methyl group. Most preferably, R represents an NH₂ group.

The use of urea (R is NH₂) in the composition of the present invention has the advantage that urea itself is a fertilizer which is typically added to the soil anyway. Urea is commercially available. Any grade of urea may be used in accordance with the present invention.

The amount of the compound of formula RC(O)NH₂ to be used in accordance with the present invention is in the range of 6 to 25, preferably 8 to 25, more preferably 10 to 25, even more preferably 15 to 25, most preferably 19 to 23 wt%, based on the total weight of the composition.

The amount of iron present in the composition in accordance with the present invention is in the range of 2.0 to 3.5 and preferably about 3 wt%, based on the total weight of the composition.

A typical aqueous composition in accordance with the present invention contains essentially 6 to 25 wt% of a compound of formula RC(O)NH₂ and 2.0 to 3.5 wt% of iron in the form of an iron chelate, based on the total weight of the composition.

The compositions of the present invention can thus be sufficiently concentrated in iron to be highly useful as remedial agents against iron deficiency in soils. We found that the compositions of the present invention were storage stable for prolonged periods of time, e.g., the compositions of Examples 1-3, which are described in detail below, were stable during more than 9 months of storage, meaning that during this time period no solid material was observed by visual inspection.

The compositions of the present invention may be prepared either by first dissolving the compound of formula RC(O)NH₂ in water and then adding the iron chelate in a solid form while stirring the aqueous solution or by first preparing a slurry of the iron chelate in water and then adding the compound of formula RC(O)NH₂ while stirring.

The present invention is illustrated by the following Examples.

### EXAMPLES

### Example 1

10 g of urea (pure grade, ex Baker) were dissolved in 40 g of water. To the urea solution, 50 g of Fe-EDDHA (Rexolin^{®} Q, ex Akzo Nobel Chemicals) were added. The mixture was vigorously stirred for 10 min. The resulting composition was a dense blood-red solution having an iron concentration of 3% (m/m) as Fe-EDDHA. The solution was stable at room temperature for a period of more than 9 months as determined by visual inspection.

### Example 2

15 g of urea (pure grade, ex Baker) were dissolved in 35 g of water. To the urea solution, 50 g of Fe-EDDHA (Rexolin^{®} Q) were added. The mixture was vigorously stirred for 10 min. The resulting composition was a dense blood-red solution having an iron concentration of 3% (m/m) as Fe-EDDHA. The solution was stable at room temperature for a period of more than 9 months as determined by visual inspection.

### Example 3

20 g of urea (pure grade, ex Baker) were dissolved in 30 g of water. To the urea solution, 50 g of Fe-EDDHA (Rexolin^{®} Q) were added. The mixture was vigorously stirred for 10 min. The resulting composition was a dense blood-red solution having an iron concentration of 3% (m/m) as Fe-EDDHA. The solution was stable at room temperature for a period of more than 9 months as determined by visual inspection.

Similar results were obtained when Rexiron^{®} and Ferica^{®} (both ex Akzo Nobel Chemicals) were used instead of Rexolin^{®} Q.

### Example 4

200 g of urea (technical grade, ex BASF) were dissolved in 300 g of water. To the urea solution, 500 g of Fe-EDDHA (Rexolin^{®} Q) was added. The mixture was vigorously stirred for 15 min. The resulting composition was a dense blood-red solution having an iron concentration of 3% (m/m) as Fe-EDDHA. The solution was stable at room temperature for a period of more than 6 months as determined by visual inspection.

### Example 5

20 g of acetamide (ex Baker) were dissolved in 30 g of water. To the acetamide solution, 50 g of Fe-EDDHA (Rexolin^{®} Q) were added. The mixture was vigorously stirred for 10 min. The resulting composition was a dense blood-red solution having an iron concentration of 3% (m/m) as Fe-EDDHA. The solution was stable at room temperature for a period of more than 1 month as determined by visual inspection.

### Example 6

50 g of Fe-EDDHA (Rexolin^{®} Q, ex Akzo Nobel Chemicals) were suspended in 35 g of water. To the mixture, 15 g of urea (pure grade, ex Baker) were added. The mixture was vigorously stirred for 10 min. The resulting composition was a dense blood-red solution having an iron concentration of 3% (m/m) as Fe-EDDHA. The solution was stable at room temperature for a period of more than 9 months as determined by visual inspection.

### Example 7

50 g of Fe-EDDHA (Rexolin^{®} Q, ex Akzo Nobel Chemicals) were suspended in 30 g of water. To the mixture, 20 g of urea (pure grade, ex Baker) were added. The mixture was vigorously stirred for 10 min. The resulting composition was a dense blood-red solution having an iron concentration of 3% (m/m) as Fe-EDDHA. The solution was stable at room temperature for a period of more than 9 months as determined by visual inspection.

## Claims

1. An aqueous composition consisting essentially of water, an iron chelate, and a compound of formula RC(O)NH₂, wherein R represents an NH₂ or a C₁-C₈ alkyl group, and the iron chelate is the ferric ion ethylenediamine N,N'-bis(2-hydroxyphenylacetic acid (Fe-EDDHA), ferric ion ethylenediamine-N,N'-bis(2-hydroxy-4-methyl-phenylacetic acid (Fe-EDDHMA) or a mixture of Fe-EDDHA or Fe-EDDHMA with one or more other iron chelates, such as ferric ion diethylenetriaminepentaacetic acid (Fe-DTPA), ferric ion ethylenediaminetetraacetic acid (Fe-EDTA) or ferric ion hydroxyethylenediaminetriacetic acid (Fe-HEDTA, **characterised in that** the amount of iron in the composition is in the range of 2.0 to 3.5 wt% and the amount of the compound of formula RC(O)NH₂ in the composition is in the range of 6 to 25 wt%, based on the total weight of the composition.

2. A composition according to claim 1, **characterised in that** R represents an NH₂ or a C₁-C₆ alkyl group.

3. A composition according to claim 1 or 2, **characterised in that** R represents an NH₂ or a methyl group.

4. A composition according to any one of claims 1-3, **characterised in that** the iron chelate comprises Fe-EDDHA.

5. A composition according to any one of claims 1-4, **characterised in that** the amount of the compound of formula RC(O)NH₂ in the composition is in the range of 8 to 25 wt%, based on the total weight of the composition.

6. A process for preparing the composition according to any one of the preceding claims comprising first dissolving the compound of formula RC(O)NH₂ in water and then adding the iron chelate in a solid form while stirring the aqueous solution.

7. A process for preparing the composition according to any one of the preceding claims comprising first preparing a slurry of the iron chelate in water and then adding the compound of formula RC(O)NH₂ while stirring.

8. Use of the composition according to any one of the preceding claims for treating iron deficiency in soils.

## Patentansprüche

1. Eine wässrige Zusammensetzung, bestehend im Wesentlichen aus Wasser, einem Eisenchelat und einer Verbindung der Formel RC(O)NH₂, wobei R eine NH-gruppe oder einen C₁-C₈-Alkylrest darstellt und das Eisenchelat die Eisenion-Ethylendiamin-N,N'-bis(2-hydroxyphenylessigsäure) (Fe-EDDHA), Eisenion-Ethylendiamin-N,N'-bis(2-hydroxy-4-methylphenylessigsäure) (Fe-EDDHMA) oder ein Gemisch von Fe-EDDHA oder Fe-EDDHMA mit einem oder mehreren anderen Eisenchelaten, wie Eisenion-Diethylentriaminpentaessigsäure (Fe-DTPA), Eisenion-Ethylendiamintetraessigsäure (Fe-EDTA) oder Eisenion-Hydroxyethylendiamintriessigsäure (Fe-HEDTA) ist, **dadurch gekennzeichnet, dass** die Menge an Eisen in der Zusammensetzung im Bereich von 2,0 bis 3,5 Gew.% und die Menge der Verbindung der Formel RC(O)NH₂ in der Zusammensetzung im Bereich von 6 bis 25 Gew.%, bezogen auf das Gesamtgewicht der Zusammensetzung, liegt.

2. Eine Zusammensetzung gemäß Anspruch 1, **dadurch gekennzeichnet, dass** R eine NH₂-Gruppe oder einen C₁-C₆-Alkylrest darstellt.

3. Eine Zusammensetzung gemäß Anspruch 1 oder 2, **dadurch gekennzeichnet, dass** R eine NH₂- oder eine Methylgruppe darstellt.

4. Eine Zusammensetzung gemäß einem der Ansprüche 1-3, **dadurch gekennzeichnet, dass** das Eisenchelat Fe-EDDHA umfasst.

5. Eine Zusammensetzung gemäß einem der Ansprüche 1-4, **dadurch gekennzeichnet, dass** die Menge der Verbindung der Formel RC(O)NH₂ in der Zusammensetzung im Bereich von 8 bis 25 Gew.%, bezogen auf das Gesamtgewicht der Zusammensetzung, liegt.

6. Ein Verfahren zur Herstellung der Zusammensetzung gemäß einem der vorstehenden Ansprüche, umfassend zuerst Lösen der Verbindung der Formel RC(O)NH₂ in Wasser und dann Hinzugeben des Eisenchelats in einer festen Form unter Rühren der wässrigen Lösung.

7. Ein Verfahren zur Herstellung der Zusammensetzung gemäß einem der vorstehenden Ansprüche, umfassend zuerst Herstellen einer Aufschlämmung des Eisenchelats in Wasser und dann Hinzugeben der Verbindung der Formel RC(O)NH₂ unter Rühren.

8. Verwendung der Zusammensetzung gemäß einem der vorstehenden Ansprüche zur Behandlung von Eisenmangel in Erdböden.

## Revendications

1. Composition aqueuse essentiellement constituée d'eau, d'un chélate de fer et d'un composé de formule RC(O)NH₂, dans laquelle R représente un groupe NH₂ ou un groupe alkyle en C₁ à C₈, et le chélate de fer est l'ion ferrique-acide éthylènediamine-N,N'-bis(2-hydroxyphénylacétique) (Fe-EDDHA), l'ion ferrique-acide éthylènediamine-N,N'-bis(2-hydroxy-4-méthyl-phénylacétique) (Fe-EDDHMA) ou un mélange de Fe-EDDHA ou de Fe-EDDHMA avec un ou plusieurs autres chélates de fer, tels que l'ion ferrique-acide diéthylènetriaminepentaacétique (Fe-DTPA), l'ion ferrique-acide éthylènediaminetétraacétique(Fe-EDTA) ou l'ion ferrique-acide hydroxyéthylènediaminetriacétique (Fe-HEDTA), **caractérisée en ce que** la quantité de fer dans la composition est dans la plage de 2,0 à 3,5 % en poids et **en ce que** la quantité du composé de formule RC(O)NH₂ dans la composition est dans la plage de 6 à 25 % en poids, par rapport au poids total de la composition.

2. Composition selon la revendication 1, **caractérisée en ce que** R représente un groupe NH₂ ou un groupe alkyle en C₁ à C₆.

3. Composition selon la revendication 1 ou 2, **caractérisée en ce que** R représente un groupe NH₂ ou un groupe méthyle.

4. Composition selon l'une quelconque des revendications 1 à 3, **caractérisée en ce que** le chélate de fer comprend du Fe-EDDHA.

5. Composition selon l'une quelconque des revendications 1 à 4, **caractérisée en ce que** la quantité du composé de formule RC(O)NH₂ dans la composition est dans la plage de 8 à 25 % en poids, par rapport au poids total de la composition.

6. Procédé de préparation de la composition selon l'une quelconque des revendications précédentes, comprenant tout d'abord la dissolution du composé de formule RC(O)NH₂ dans de l'eau puis l'addition du chélate de fer sous forme solide avec agitation de la solution aqueuse.

7. Procédé de préparation de la composition selon l'une quelconque des revendications précédentes comprenant tout d'abord la préparation d'une pâte du chélate de fer dans de l'eau puis l'addition du composé de formule RC(O)NH₂ avec agitation.

8. Utilisation de la composition selon l'une quelconque des revendications précédentes pour traiter pour traiter un appauvrissement en fer du sol.
